(19)

Europäisches
Patentamt
European
Patent Office
Office européen
des brevets

(11) **EP 2 298 445 A1**

(12) **EUROPEAN PATENT APPLICATION**

(43) Date of publication:
**23.03.2011 Bulletin 2011/12**

(21) Application number: **09010655.0**

(22) Date of filing: **19.08.2009**

(51) Int Cl.:
*B01J 29/068* (2006.01)     *B01J 29/072* (2006.01)
*B01J 29/10* (2006.01)      *B01J 29/42* (2006.01)
*B01J 29/72* (2006.01)      *B01J 37/00* (2006.01)
*C10G 45/64* (2006.01)      *B01J 29/80* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **King Abdulaziz City for Science and
Technology
P.O. Box 6086
Riyadh 11442 (SA)**

(72) Inventors:
 • **Akhmedov, Vagif M., Dr.
Baku (AZ)**

 • **Al-Khowaiter, Soliman H. Dr.
11442 Riyadh (SA)**
 • **Al-Migrin, Hamid Dr.
11442 Riyadh (SA)**

(74) Representative: **Goddar, Heinz J.
Forrester & Boehmert
Pettenkoferstrasse 20-22
80336 München (DE)**

Remarks:
Amended claims in accordance with Rule 137(2)
EPC.

(54) **Hydroconversion process and catalyst used therein**

(57)     The present invention relates to a hydroconversion process which comprises reacting a hydrocarbon feed rich in normal and/or slightly branched paraffins with a source of hydrogen in the presence of a catalyst composition which comprises two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being preferably ultrastable Y zeolite (USY), and a binder of up to 25 weight percent, based on the total weight of the support, at a pressure of about 1-5 bar and at a temperature in the range of 200-300°C, with a hydrogen/feed molar ratio in the range of from 5 to 15 mol/mol; as well as a catalyst composition used therein.

EP 2 298 445 A1

**Description**

The present invention relates to a hydroconversion process as well as to a catalyst composition which may be utilized in that process. The hydroconversion process of the present invention comprises the sequential steps of isomerization followed by cracking of multi-branched intermediate isomers. Thus, the hydroconversion process combines isomerization and cracking steps.

The demand for different fuels has almost doubled in the past thirty years due to the car industry and new engine developments. During the coming decades petroleum will still be the main source of energy fuels and will supply a large share of the fuel required by industry and virtually all the fuel required for transport. Concern over the negative effects of fuel and oil usage on the environment has caused severe changes in regulations with impact on gasoline, other jet fuels and lubricating oils. In particular, the forthcoming gasoline regulations are becoming more and more complex increasing the requirements for high quality of fuels. To meet these challenges, the progressive improvements and in some cases technological breakthroughs are required.

So far, methyl tertiary butyl ether (MTBE) has played a key role in the development of the today's regulatory approach to control vehicle emissions. However, the discovery of MTBE contamination of surface and ground water has prompted review of the environmental drawbacks associated with the use of MTBE as gasoline blend component. Additionally, new regulations for aromatic compounds, olefins, sulfur and nitrogen have been discussed.

At the present time, refiners are looking for more environmentally safe octane blending components as MTBE alternatives.

Petroleum fractions contain significant amounts of n-alkanes. The isomerization of alkanes into branched isomers is one of the important processes in the petroleum refining. The highly branched paraffins with 5-10 carbon atoms would be best to fulfill the recent requirements of the reformulated gasoline. Therefore, the production of paraffin based high-octane gasoline blendstock such as isomerates from hydroconversion of n-paraffins might be a key technology for gasoline supply to cope with future gasoline regulations.

There have been significant advantages over the last two decades on the selective hydroisomerization of light naphtha ($C_5$-$C_6$) into their branched isomers to be used as motor fuel components. Recently, the hydroisomerization of light naphtha to branched isomers was introduced in petroleum industry. Isomerization of light naphtha streams gives high octane number branched $C_5$-$C_6$-isomers which are good gasoline components; and isobutane, an important raw product for alkylation. This process typically produces an increase of 10-18 octane numbers.

To fulfill the future needs for gasoline with high octane number enhanced by environmentally friendly way, it is necessary to improve the hydroconversion processes of high n-paraffins. The combined selective isomerization and hydrocracking of mid-cut naphtha fractions and high n-paraffins is among the most promising ways to realize the above mentioned needs.

The challenge for the research in that area is to find an effective catalyst favoring the sequential isomerization with following selective hydrocracking of high n-paraffins into LPG (liquefied petroleum gas) which is suitable for automobile applications, and high octane gasoline pool components.

There are a few proposals of processes for the combined isomerization and cracking of the normal and/or or slightly branched $C_9$+ range paraffins into high octane gasoline pool components in the art.

For example, US 3,969,277 provides a process for the preparation of a tungsten supported on erionite catalyst. The process comprises contacting feedstock with the catalyst in the presence of hydrogen at high temperatures and pressures. The process realizes at 400°C a yield of up to 86.3 weight percent gasoline with octane number 97 and 13.7 weight percent of a mixture of gases $C_1$-$C_4$.

EP 1 640 434 A1 provides a one-stage combined isomerization and cracking of a naphtha boiling range hydrocarbonaceous feedstock with a source of hydrogen in the presence of catalyst composition which comprises a Group VIII metal and optionally a Group VIb metal on a support. The support comprises at least 20 weight percent of a crystalline molecular sieve having pores in the range of from 0.65 nm to 0.9 nm, and a pressure in the range of 10 to 120 atm, a temperature in the range of from 300 to 450°C. It is related to the sequential isomerization and cracking for the production of LPG with a selectivity of up to 80 weight percent, with a $C_3$-$C_4$ ratio of 0.6 while keeping $C_1$-$C_2$ yield at about 10 weight percent of the feed. The process produces only 10 weight percent of the lighter residual naphtha with an octane number of greater than 87, having a higher concentration of retained aromatics.

It is an object of the present invention to provide a process for hydroconversion of a hydrocarbon feed rich in normal and/or slightly branched paraffins which overcomes the drawbacks of the prior art. Especially, the process shall result in products having low olefin and low aromatic content, as well as a low content of $C_1$-$C_3$ gaseous hydrocarbons. The product shall be also substantially without sulfur and nitrogen. Preferably, the product shall be LPG with high concentration of isobutane and high octane gasoline pool components, wherein the products can be easily utilized in automobile applications.

Additionally, it is an object of the present invention to provide a catalyst composition which is suitably used in that process.

The first object is achieved by a hydroconversion process which comprises reacting a hydrocarbon feed rich in normal and/or slightly branched paraffins with a source of hydrogen in the presence of a catalyst composition which comprises two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being preferably ultrastable Y zeolite (USY) and a binder of up to 25 weight percent, based on the total weight of the support, at a pressure of about 1-5 bar and at a temperature in the range of 200-300°C, with a hydrogen/feed molar ratio in the range of from 5 to 15 mol/mol. Preferably, the hydrocarbon feed comprises $C_9+$ normal paraffins and/or mid-cut naphtha petroleum fraction, preferably hydrotreated naphtha.

Preferably, the two different metals of the catalyst composition are Pt-Ni, Pd-Ni, Pt-Fe, Pt-Ir or Pt, Co, preferably Pt-Ni.

In one embodiment the at least two different crystalline molecular sieves are selected from USY, ZSM-5 and zeolite beta.

The process may be carried out in tubular a bed type reactor having a space velocity in the range of 0.5 to 4.0 $h^{-1}$.

It is also preferred, that the binder comprises gamma-$Al_2O_3$, $SiO_2$, $ZrO_2$, $TiO_2$ or any mixtures thereof.

The crystalline molecular sieves are preferably in acid form.

The second object is achieved by a catalyst composition for hydroconversion of a hydrocarbon feed rich in normal and/or slightly branched paraffins, comprising two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being preferably ultrastable Y zeolithe (USY), and a binder of up to 25 weight percent, based on the total weight of the support.

Surprisingly it was found that the inventive process results in products in high amounts and selectivities which can be either successfully used in alkylation (isobutane) or are very suitable for automobile applications. The products of the inventive process have low contents of olefins, aromatics and $C_1$-$C_3$ gaseous hydrocarbons. Additionally, the products are substantially free of sulfur and nitrogen. The hydroconversion process can be carried out in one stage combining isomerization and cracking. Further, the process can produce up to 95-96 weight percent of LPG (with high concentration of isobutane and being suitable for automobile application) and gasoline pool components with a research octane number (RON) >90 and complete conversion of the feed. The products of the process contain less than 5.0 weight percent of propane and only traces of $C_1$-$C_2$ hydrocarbons. The $C_4$ fraction of the produced products contains more than 90 weight percent of isobutane, which is an ideal feedstock for alkylation.

Most preferably, the present invention provides a hydroconversion process involving sequential isomerization with following cracking steps of the feed with a source of hydrogen for production of LPG and gasoline pool components having octane number of >90 using especially Ni-Pt or Ni-Pd on USY-ZSMS/($\gamma$-$Al_2O_3$+$ZrO_2$+$TiO_2$) composite catalyst at a temperature in a range of 220-280°C under normal pressure and at a space velocity in the range of 0.5 to 4.0 $h^{-1}$ in a tubular bed type reactor wherein the hydrogen to feed ratio is in a range of from 5 to 15 mol/mol. The present invention enables high levels of conversion to be employed, so that yields of octane blending components are produced directly from the feed in a single pass. In addition, yields of low end cracking products, such as methane, ethane and propane, are minimized in the inventive process.

It was found, that for example, the yield of $iC_5$ in a hydrocracking product obtained from n-$C_{10}$ feed can be increased significantly by combination of different zeolites and modification with different metals.

Detailed description of the invention

Feed

The feed used in the process of the present invention is rich in normal and/or slightly branched paraffins. The feed of the inventive process preferably comprises mid-cut naphtha petroleum fraction and/or $C_9^+$ normal paraffins or mixtures thereof. Alternatively or additionally it may also comprise a feed rich in normal and/or slightly branched light and/or mid-cut naphtha range petroleum fractions. Feedstock comprising $C_{10}$-$C_{20}$-paraffins from Fisher-Tropsch-synthesis may also be treated by the present process. Preferably, the process operates with hydrotreated feeds. A preliminary hydrotreating step may be carried out using a conventional hydrotreating catalyst to remove sulfur and nitrogen.

Hydroconversion (combining hydrocracking and isomerization)

The feedstock is subjected to a hydroconversion process in the presence of hydrogen involving sequential isomerization and selective cracking in a single pass to produce LPG (with high concentration of isobutane and suitable for the automobile applications) and high octane gasoline branched isoparaffins.

Within a wide range of zeolite-based catalysts for hydroconversion, it has now been found that a combination of certain zeolites with different pore morphology, modified with different metals, can be designed for the composite systems, which in the presence of hydrogen selectively convert the feedstock with long carbon chains to octane blending isoparaffins, while minimizing formation of $C_1$-$C_3$ gaseous hydrocarbons. Molecular sieves of interest in the present invention are crystalline materials having defined pores or channels within a regular crystalline structure. The structures and their pore or channel sizes are well documented in the art, for example in the "Atlas of Zeolite Framework Types", Ch. Baerlocher, W.M. Meier, and D.H. Olson, 5th Edition, Elsevier Amsterdam 2001, which also documents references describing how these materials are to be prepared. As used herein "pores with a largest diameter" are crystallographic free diameters calculated as in the "Atlas of Zeolite Framework Types", idem. The term denotes the largest channel width or pore diameter in the molecular sieve structure.

In the context of the present specification, the term "molecular sieve" also includes the corresponding (hydrothermally) stabilized and dealuminated derivatives and such derivatives as may be obtained by isomorphous substitution and cation exchange. Methods for cation exchange, (hydrothermal) stabilization, dealumination and isomorphous substitution of molecular sieves are well known in the art and are not therefore further discussed in the present specification. The term "crystalline molecular sieve" will also be used herein interchangeably with the term "zeolite". Most preferably, the molecular sieves used in the present invention are in its acid form.

It was further surprisingly found that a composition comprising zeolite USY (or USY+Zeolite Beta) in combination with ZSM-5 shows synergistic properties. Zeolite Y exhibits the faujasit structure. It has a three dimensional pore structure with pores running perpendicular to each other in the x, y and z planes, and the pore diameter is 0.74 defined by a 12-membered oxygen ring, and leads into a larger cavity of diameter of 1.2 nm. Hydrothermal dealumination of Y zeolite results in the expulsion of tetrahedral aluminum from the framework into non-framework positions increasing the framework silica-to-alumina ratio, which leads to the formation of ultra-stable Y zeolites (USY).

Zeolite ZSM-5 has two types of pores having diameter of 0.53-0.56 nm, both formed by 10-membered oxygen rings.

Zeolite beta consists of an intergrowth of two distinct structures. These structures grow as two dimensional channels and they randomly alternate between the two. Tetragonal crystal structure with straight 12-membered ring channels with crossed 10-membered ring channels.

The catalyst composition of the present invention contains binder materials. Many inorganic oxides such as alumina, silica, zirconia, titanium oxide or their mixtures can be used as a binder. Most preferred as a binder is a mixture of above mentioned oxides. Most preferred supports contain from 35 to 70 weight percent of zeolite USY, 15 to 20 weight percent of ZSM-5 with the balance being the binder.

As first metal components of the catalyst are preferably used platinum, palladium or iridium (more preferred platinum), which are utilized in combination with the second metal component selected from nickel, cobalt or iron (more preferably nickel). According to the present invention, the catalyst may contain a noble metal in the range of from 1.3 to 2.8 weight percent, preferably 1.3 to 2.0 weight percent.

Suitable metal combination procedures include impregnation, wherein the support is contacted with the solution of a suitable salt of the metal component. Suitably the metal salt solutions can be aqueous or organic solutions of soluble salts of metals, preferred organic solutions (cyclohexane, benzene, etc.). Examples of soluble salts in hydrocarbons are acetyl acetonates of the used metals. Following the incorporation of metals onto the support, the catalyst composition is dried at a temperature of from 100 to 200°C for a period of 1 to 3 hours, and then calcined at a temperature in the range of from 350 to 450°C.

In a more preferred embodiment, the process of the present invention is carried out using a wide variety of $C_9$+ normal paraffins range feedstock with a source of hydrogen in a single pass in the presence of Ni-Pt on USY/ZSM-5/($\gamma$-$Al_2O_3$+$ZrO_2$+$TiO_2$) catalyst at normal or low (2-5 bar) pressure, at a temperature at a range of 230-300°C and in a reactor wherein the hydrogen to feed ratio is the range of 7-12 mol/mol.

In the process of the invention, the catalyst used has been found to exhibit a very high stability as will be demonstrated below.

Preferably, the tubular fixed bed reactor is down flow reactor.

Additional advantages and features of the present invention can be taken from the further more detailed description of examples, taken together with the drawings wherein

Fig. 1 illustrates a typical laboratory flow sheet diagram for the process of the invention; and

Fig. 2 is a graph showing catalyst stability on stream in hydroconversion using hexadecane as feedstock in the process of the present invention.

The present invention will now be illustrated by the following examples.

Examples

Example 1. Catalyst preparation

A number of catalysts were prepared utilizing different zeolite containing supports. The following procedure is exemplary of how each support was prepared.

Preparation of catalyst 1:

6.0 grams of zeolite USY (grade CBV 417 Zeolyst) and 2.0 grams of ZSM-5 (Zeolyst) were mixed with a mixture of 2.0 $(Al(OH)_3+ZrO_2+TiO_2)$ and allowed to extensive stirring for 30 minutes. Then the resulting mixture was dried for 3-4 hours 110-120°C in a static furnace. After that the solid mass was calcined in a well vented static furnace for 3 hours at 450-500°C.

Then 5 grams of the received support were placed in the rotating vessel and 100 ml of n-cyclohexane solution containing 0.05 weight percent platinum (in the form $H_2PtCl_6$) and 0.025 weight percent nickel (in the form of $Ni(C_2H_7O_5)_2$) was added. Mixing was carried out at room temperature for 1 hour, followed by slow evaporation of the solvent in a rotary evaporator. The material was then heated for 2-3 h at 110-120°C and treated under hydrogen flow (60-80 ml/min) at 500°C for 3 hours.

Following the same procedure as illustrated above, the catalyst composition as listed in table 1 below were prepared:

Table 1: List of prepared catalyst compositions

| Catalyst | Composition of Support (wt%) Zeolite | Binder | Supported metals (wt%) |
|---|---|---|---|
| 1 | 60%USY/ZSM-5(15%) | 25%[γ-Al$_2$O$_{3(}$10)+ZrO$_2$(8)+TiO$_2$(7)] | 1.3% [Pt(1)+Ni(0.3)] |
| 2 | 65%USY/ZSM-5(15%) | 20%[γ-Al$_2$O$_3$(10)+ZrO$_2$(5)+TiO$_2$(5)] | 1.5% [Pt(1)+Pd(0.5)] |
| 3 | 70%USY/ZSM-5(15%) | 15% γ-Al$_2$O$_3$ | 2.5% [Pt(1.5)+Ni(1)] |
| 4 | 60%USY/ZSM-5(20%) | 25%[γ-Al$_2$O$_3$(10)+ZrO$_2$(5)+TiO$_2$(5)] | 2.8% [Pt(1.3)+Fe(0.5)] |
| 5 | 35%USY/ZSM-5(20)/Beta(25) | 20%[γ-Al$_2$O$_3$(10)+ZrO$_2$(5)+TiO$_2$(5)] | 2% [Pt(1.5)+Ni(0.5)] |
| 6 | 60% USY/ZSM-5(20%) | 20%[γ-Al$_2$O$_3$(15)+ZrO$_2$(5)] | 2.0% [Pt(1)+Pd(1)] |
| 7 | 60% USY/ZSM-5(20%) | 20%[γ-Al$_2$O$_3$(15)+TiO$_2$(5)] | 2.2% [Pd(1.5)+Ni(0.7)] |
| 8 | 60% USY/ZSM-5(20%) | 20%[γ-Al$_2$O$_3$(15)+TiO$_2$(5)] | 2.3% [Pt(0.8)+Pd(1.5)] |
| 9 | 60% USY/ZSM-5(15%) | 20%[γ-Al$_2$O$_3$(15)+ZrO$_2$(5)+TiO$_2$(5)] | 1.5% [Pt(1)+Co(0.5)] |
| 10 | 60% USY/ZSM-5(20%) | 20%[γ-Al$_2$O$_3$(10)+ZrO$_2$(5)+TiO$_2$(5)] | 1.5% [Pt(1)+Ir(0.5)] |

Example 2. Catalyst activity testing

The activity and selectivity testing of the catalyst compositions prepared was conducted at atmospheric pressure in a laboratory pilot-unit with a tubular flow fixed-bed reactor connected to a gas chromatograph Varian-RGA Model 3600 GC.

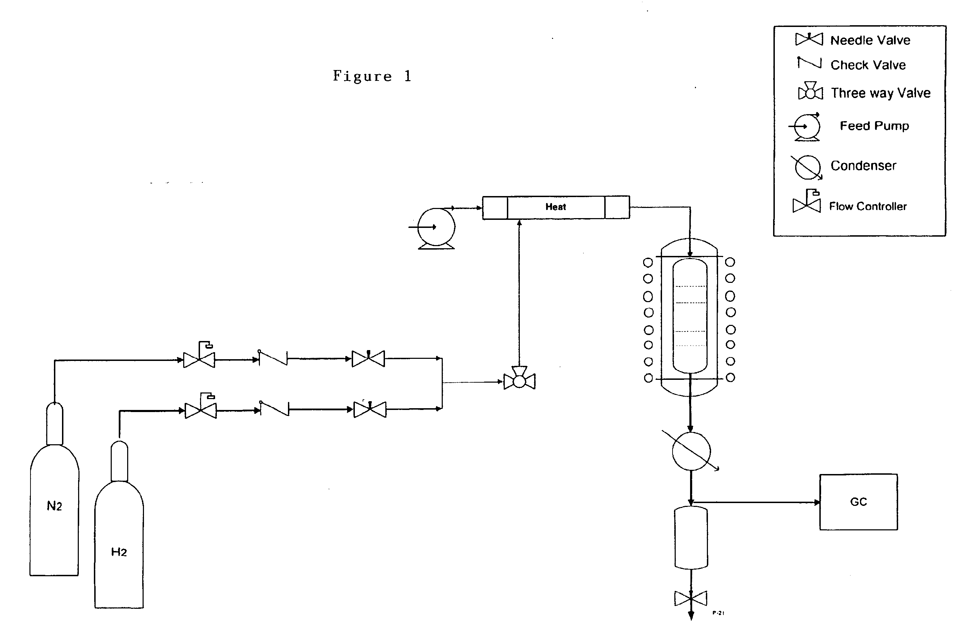

Figure 1 illustrates a typical laboratory flow sheet diagram for the process of the invention. Nitrogen and hydrogen gas are introduced via a flow controller, a check wave, a needle valve and a three way valve and a heater into the reactor. Also introduced into the reactor is a feed which is introduced via a feed pump and the heater. Products from the reactor are transferred to a condenser and are then analyzed by gas chromatograph.

The testing was carried out using the following conditions:

PP 1 bar

$$H_2/feed = 5\text{-}15 \text{ mol}_{H2}/mol_{feed}$$

$$T \text{ [°C]} = 230\text{-}300°C$$

Individual normal paraffins $C_9$-$C_{16}$ (purity > 99%) and a mid-cut naphtha fraction from Yanbu Refinery (Saudi Arabia) with the following initial properties were used for the catalyst activity and selectivity testing.

Table 2. Properties of hydrotreated mid-cut naphtha fraction used as a feed

| Property | Mid-cut Naphtha |
|---|---|
| Density, 15°C | 0.7391 |
| Paraffins, % vol | 35.219 |
| Iso-Paraffins, % vol | 35.172 |
| Olefins, % vol | 0.461 |
| Naphthenes, % vol | 15.032 |
| Aromatics, % vol | 13.582 |
| Distillation, °C | |
| IBP | 92.10 |
| 10% | 108.2 |
| 30% | 116.6 |
| 50% | 125.7 |
| 70% | 137.6 |
| 90% | 152.8 |
| FBP | 180.10 |
| RON (calculated) | 53.39 |
| IBP = initial boiling point; FBP = final boiling point | |

The experimental conditions as mentioned above were used for a typical run to test the catalytic performance as follows:

0.3-0.5 g of crushed and sieved (30-60 mesh) catalyst sample was loaded into a stainless steel reactor tube. A thermocouple was placed on the center of the catalyst bed to monitor the reaction temperature. The catalyst was calcined at 500°C for 3 hours in an nitrogen atmosphere, and was then reduced with hydrogen at 250°C for 2 hours.

After preparing the catalyst, feed was dosed via mass flow controllers and mixed with a stream of hydrogen gas at normal pressure. The combined feed stream was first heated to the reaction temperature and was then fed to the down-flow fixed bed reactor where hydroconversion reaction took place. Reactor temperatures in the range of 230-300°C were scanned to achieve high conversion levels. All the reaction products were analyzed online by a gas chromatograph on a 30 m long DB1 capillary column. Each percentage of reaction products was calculated from the chromatographs as a mass of that product divided by the mass of hydrocarbon reacted. For the calculation of octane performance, the reactor effluent containing the reaction products was fed to the condenser where the gas was separated from the liquid products and analyzed on a PIONA chromatograph.

The results of the testing of individual $C_9$+ normal paraffins and mid-cut naphtha petroleum fractions are shown in tables 3 to 13.

**Table 3: Products distribution of n-Nonane hydroconversion on catalyst [1] at 300°C (wt%)**

|  | Parafins | Iso-Paraffins | Olefins | Naphthenes | Aromatics | Total |
|---|---|---|---|---|---|---|
| C1 | 0.098 | 0 | 0 | 0 | 0 | 0.098 |
| C2 | 0.108 | 0 | 0 | 0 | 0 | 0.108 |
| C3 | 5.351 | 0 | 0 | 0 | 0 | 5.351 |
| C4 | 8.553 | 19.762 | 0 | 0 | 0 | 28.315 |
| C5 | 7.605 | 25.225 | 0 | 0 | 0 | 32.830 |
| C6 | 0.813 | 8.676 | 0 | 0.332 | 0.004 | 9.824 |
| C7 | 0.197 | 0.551 | 0.001 | 0.273 | 0 | 1.021 |
| C8 | 0.166 | 6.439 | 0.224 | 3.602 | 0.856 | 11.287 |
| C9 | 0.080 | 8.320 | 0.237 | 2.290 | 0 | 10.927 |
| Total: | 22.971 | 68.973 | 0.462 | 6.496 | 0.860 | 99.761 |

Oxygenates: 0    Total C10+: 0    Unknowns: 0.239    Grand Total: 100.0

**OCTANE NUMBER (calculated): 95.89**

**Table 4: Products distribution of n-Nonane hydroconversion on catalyst [3] at 260°C (wt%)**

|  | Parafins | Iso-Paraffins | Olefins | Naphthenes | Aromatics | Total |
|---|---|---|---|---|---|---|
| C1 | 0.065 | 0 | 0 | 0 | 0 | 0.065 |
| C2 | 0.024 | 0 | 0 | 0 | 0 | 0.024 |
| C3 | 2.826 | 0 | 0 | 0 | 0 | 2.826 |
| C4 | 8.258 | 30.401 | 0 | 0 | 0 | 38.660 |
| C5 | 12.456 | 36.062 | 0 | 0 | 0 | 48.518 |
| C6 | 1.024 | 4.303 | 0 | 0.174 | 0.003 | 5.504 |
| C7 | 0.087 | 0.546 | 0.001 | 0.114 | 0 | 0.747 |
| C8 | 0.030 | 0.179 | 0.017 | 0.343 | 0.017 | 0.587 |
| C9 | 0.020 | 1.572 | 0.166 | 0.102 | 0.324 | 2.184 |
| C10 | 0.084 | 0.022 | 0 | 0.781 | 0 | 0.886 |
| Total: | 22.971 | 68.973 | 0.462 | 6.496 | 0.860 | 99.761 |

Oxygenates: 0    Total C 10+: 0    Unknowns: 0    Grand Total: 100.0

**OCTANE NUMBER (calculated): 99.94**

**Table 5: Products distribution of n-Nonane hydroconversion on catalyst [2] at 300°C (wt%)**

|  | Parafins | Iso-Paraffins | Olefins | Naphthenes | Aromatics | Total |
|---|---|---|---|---|---|---|
| C1 | 0.111 | 0 | 0 | 0 | 0 | 0.111 |
| C2 | 0.049 | 0 | 0 | 0 | 0 | 0.049 |
| C3 | 4.920 | 0 | 0 | 0 | 0 | 4.920 |
| C4 | 9.373 | 25.292 | 0 | 0 | 0 | 34.666 |
| C5 | 9.472 | 33.084 | 0 | 0 | 0 | 42.557 |
| C6 | 1.002 | 7.901 | 0 | 0.080 | 0 | 8.983 |
| C7 | 0 | 0 | 0 | 0 | 0 | 0 |
| C8 | 0 | 0 | 0 | 0 | 0 | 0 |
| C9 | 1.519 | 3.629 | 0.311 | 3.256 | 0 | 8.71 |
| Total: | 21.477 | 69.907 | 5.279 | 3.337 | 0 | 100 |

Oxygenates: 0    Total C9+: 0    Unknowns: 0    Grand Total: 100.0

**OCTANE NUMBER (calculated): 95.34**

**Table 6: Products distribution of n-Decane hydroconversion on catalyst [1] at 280°C (wt%)**

|  | Parafins | Iso-Paraffins | Olefins | Naphthenes | Aromatics | Total |
|---|---|---|---|---|---|---|
| C1 | 0.045 | 0 | 0 | 0 | 0 | 0.045 |
| C2 | 0.062 | 0 | 0 | 0 | 0 | 0.062 |
| C3 | 3.445 | 0 | 0 | 0 | 0 | 3.445 |
| C4 | 4.714 | 16.495 | 0 | 0 | 0 | 21.209 |
| C5 | 5.670 | 23.706 | 0 | 0 | 0 | 29.376 |
| C6 | 4.758 | 24.905 | 0 | 0.531 | 0.004 | 30.194 |
| C7 | 0.419 | 5.675 | 0.001 | 0.364 | 0 | 6.458 |
| C8 | 0.114 | 0.812 | 0.038 | 0.182 | 0.061 | 1.208 |
| C9 | 0.56 | 0.086 | 0.200 | 0.046 | 1.047 | 1.435 |
| C10 | 0.686 | 2.297 | 0.347 | 0.486 | 1.056 | 4.871 |
| C11 | 0 | 1.234 | 0 | 0 | 0 | 1.234 |
| Total: | 19.969 | 75.209 | 4.029 | 1.609 | 2.164 | 99.535 |
| Oxygenates: 0 | | Total C11+: 0 | Unknowns: 0.465 | | Grand Total: 100.0 | |

**OCTANE NUMBER (calculated): 90.01**

**Table 7: Products distribution of n-Decane hydroconversion on catalyst [3] at 240°C (wt%)**

|  | Parafins | Iso-Paraffins | Olefins | Naphthenes | Aromatics | Total |
|---|---|---|---|---|---|---|
| C1 | 0.040 | 0 | 0 | 0 | 0 | 0.040 |
| C2 | 0.017 | 0 | 0 | 0 | 0 | 0.017 |
| C3 | 1.536 | 0 | 0 | 0 | 0 | 1.536 |
| C4 | 2.486 | 16.596 | 0 | 0 | 0 | 19.082 |
| C5 | 5.396 | 27.877 | 0 | 0 | 0 | 33.273 |
| C6 | 5.682 | 21.263 | 0 | 0.108 | 0 | 27.053 |
| C7 | 0 | 0.222 | 0 | 0.098 | 0 | 0.320 |
| C8 | 0 | 0.190 | 0 | 0.099 | 0.282 | 0.572 |
| C9 | 0.018 | 0.876 | 1.180 | 1.081 | 0 | 3.155 |
| C10 | 0 | 6.677 | 0.002 | 0.067 | 0 | 6.745 |
| Total: | 15.177 | 73.701 | 1.182 | 1.452 | 0.282 | 91.795 |
| Oxygenates: 0 | | Total C 10+: 0 | Unknowns: 8.205 | | Grand Total: 100.0 | |

**OCTANE NUMBER (calculated): 91.45**

**Table 8: Products distribution of n-Decane hydroconversion on catalyst [5] at 270°C (wt%)**

|  | Parafins | Iso-Paraffins | Olefins | Naphthenes | Aromatics | Total |
|---|---|---|---|---|---|---|
| C1 | 0.014 | 0 | 0 | 0 | 0 | 0.014 |
| C2 | 0.011 | 0 | 0 | 0 | 0 | 0.011 |
| C3 | 3.321 | 0 | 0 | 0 | 0 | 3.321 |
| C4 | 4.650 | 15.743 | 0 | 0 | 0 | 20.393 |
| C5 | 5.709 | 21.695 | 0 | 0.738 | 0 | 28.142 |
| C6 | 4.746 | 25.136 | 0 | 0.283 | 0 | 30.165 |
| C7 | 0 | 6.004 | 0 | 0.007 | 0 | 6.011 |
| C8 | 0.077 | 0.150 | 0 | 0.062 | 0 | 0.289 |
| C9 | 0 | 0 | 0.027 | 0.093 | 0.952 | 1.073 |
| C10 | 0 | 5.902 | 0.406 | 0.533 | 0 | 6.841 |
| Total: | 18.528 | 74.629 | 0.433 | 1.717 | 0.952 | 96.259 |

(continued)

| | Parafins | Iso-Paraffins | Olefins | Naphthenes | Aromatics | Total |
|---|---|---|---|---|---|---|
| Oxygenates: 0 | | Total C11+: 0 | Unknowns: 3.741 | | Grand Total: 100.0 | |

**OCTANE NUMBER (calculated): 90.31**

**Table 9: Hydroconversion of $C_{11}$-$C_{16}$ n-Alkanes on catalyst [4]**

| Hydrocarbon | n-$C_{11}$ | n-$C_{12}$ | n-$C_{14}$ | n-$C_{15}$ | n-$C_{16}$ |
|---|---|---|---|---|---|
| Temperature (K) | 503 | 503 | 493 | 493 | 483 |
| Conversion (%) | 100 | 100 | 100 | 100 | 100 |
| Products Distribution (wt.%) | | | | | |
| $C_1$+$C_2$ | - | - | - | - | - |
| $C_3$ | 2.5 | 2.0 | 0.8 | 0.6 | 0.9 |
| $\Sigma C_4$ (iso/normal) | 18.1 (3.7) | 15.2(5.9) | 5.9(4.9) | 4.8(4.2) | 8.2(4.9) |
| $\Sigma C_5$ (iso/normal) | 23.7 (4.8) | 19.8 (7.1) | 8.5 (7.4) | 6.9 (5.5) | 12.7 (6.9) |
| $\Sigma C_6$ (iso/normal) | 27.2 (5.2) | 21.3(8.1) | 10.3 (6.9) | 8.7 (5.9) | 15.3 (9.5) |
| $\Sigma C_7$ (iso/normal) | 25.6 (7.4) | 23.5 (10.8) | 14.1 (9.7) | 13.1 (7.2) | 18.3 (13.1) |
| $\Sigma C_8$ (iso/normal) | 2.9 (21.5) | 18.2(9.1) | 18.6 (9.9) | 18.0(8.1) | 17.8(15.0) |
| $\Sigma C_9$ (iso/normal) | - | - | 29.2 (9.6) | 27.7 (10.2) | 19.6 (14.4) |
| $\Sigma C_{10}$ (iso/normal) | - | - | 12.6 (10.6) | 20.2 (11.4) | 7.2 (100% iso) |
| $\Sigma C_4$+(iso/normal) | 97.5(8.5) | 98.0(8.2) | 99.2(8.4) | 99.4(7.5) | 99.1(10.1) |

**Table 11: Products distribution of Mid-cut hydroconversion on catalyst [5] at 300°C (wt%)**

| | Parafins | Iso-Paraffins | Olefins | Naphthenes | Aromatics | Total |
|---|---|---|---|---|---|---|
| C1 | 0.035 | 0 | 0 | 0 | 0 | 0.035 |
| C2 | 0.081 | 0 | 0 | 0 | 0 | 0.081 |
| C3 | 1.476 | 0 | 0 | 0 | 0 | 1.476 |
| C4 | 1.566 | 4.323 | 0 | 0 | 0 | 5.889 |
| C5 | 1.493 | 5.443 | 0 | 0 | 0 | 6.935 |
| C6 | 1.089 | 4.014 | 0 | 1.262 | 0.061 | 6.425 |
| C7 | 2.613 | 11.891 | 0 | 7.719 | 0 | 22.223 |
| C8 | 0.446 | 20.760 | 0.994 | 16.442 | 4.228 | 42.870 |
| C9 | 1.039 | 5.599 | 0.041 | 0.915 | 1.002 | 0.685 |
| C10 | 0.108 | 0.171 | 0 | 2.110 | 0.163 | 2.553 |
| C11 | 0 | 0.011 | 0 | 0 | 0.096 | 0.106 |
| C12 | 0.021 | 0.049 | 0.011 | 0 | 0.299 | 0.380 |
| C13 | 0.424 | 0 | 0.022 | 0 | 0 | 0.446 |
| Total: | 10.033 | 52.262 | 1.068 | 28.448 | 5.848 | 99.554 |
| Oxygenates: 0 | | Total C14+: 0 | Unknowns: 0.446 | | Grand Total: 100.0 | |

**OCTANE NUMBER (calculated): 89.97**

**Table 12: Products distribution of Mid-cut hydroconversion on catalyst [8] at 280°C (wt%)**

| | Parafins | Iso-Paraffins | Olefines | Naphthenes | Aromatics | Total |
|---|---|---|---|---|---|---|
| C1 | 0.011 | 0 | 0 | 0 | 0 | 0.011 |
| C2 | 0.065 | 0 | 0 | 0 | 0 | 0.065 |

(continued)

| | Parafins | Iso-Paraffins | Olefines | Naphthenes | Aromatics | Total |
|---|---|---|---|---|---|---|
| C3 | 4.157 | 0 | 0 | 0 | 0 | 4.157 |
| C4 | 3.923 | 14.195 | 0 | 0 | 0 | 18.118 |
| C5 | 1.752 | 13.690 | 0 | 0 | 0 | 15.443 |
| C6 | 2.201 | 8.129 | 0 | 0.715 | 0 | 11.044 |
| C7 | 3.017 | 19.802 | 1.549 | 8.173 | 0 | 32.542 |
| C8 | 0 | 7.100 | 1.007 | 5.600 | 0.030 | 13.737 |
| C9 | 0 | 0.689 | 0.259 | 0.639 | 0 | 1.587 |
| C10 | 0 | 0.049 | 0 | 0.018 | 0 | 0.067 |
| C11 | 0 | 0.064 | 0 | 0 | 0 | 0.064 |
| Total: | 15.126 | 63.718 | 2.815 | 15.145 | 0.030 | 96.834 |
| Oxygenates: 0 | | Total C11+: 0 | Unknowns: 3.166 | | Grand Total: 100.0 | |

**OCTANE NUMBER (calculated): 91.89**

**Table 13: Products distribution of Mid-cut hydroconversion on catalyst [3] at 300°C (wt%)**

| | Paraffins | Iso-Paraffins | Olefins | Naphthenes | Aromatics | Total |
|---|---|---|---|---|---|---|
| C1 | 0.146 | 0 | 0 | 0 | 0 | 0.146 |
| C2 | 0.090 | 0 | 0 | 0 | 0 | 0.090 |
| C3 | 7.546 | 0 | 0 | 0 | 0 | 7.546 |
| C4 | 7.813 | 17.924 | 0 | 0 | 0 | 25.738 |
| C5 | 4.117 | 14.866 | 0 | 0 | 0 | 18.983 |
| C6 | 2.600 | 8.159 | 0 | 1.704 | 1.199 | 13.662 |
| C7 | 1.871 | 11.154 | 0 | 0.695 | 0 | 13.721 |
| C8 | 0.750 | 10.064 | 0.828 | 0.809 | 2.286 | 14.737 |
| C9 | 0.114 | 1.588 | 0.331 | 0.121 | 0.008 | 2.162 |
| C10 | 0 | 0.299 | 0.408 | 0.009 | 0.017 | 0.733 |
| C11 | 0 | 0.154 | 0 | 0 | 0 | 0.154 |
| Total: | 25.047 | 64.209 | 1.567 | 3.338 | 3.510 | 97.672 |
| Oxygenates: 0 | | Total $C_{11}$+: 0 | Unknowns: 2.328 | | Grand Total: 100.0 | |

**OCTANE NUMBER (calculated): 91.78**

From Tables 3-6, it can be taken that catalysts used in the process of the present invention for the hydroconversion yield high amounts of $C_4$-$C_5$ (77-87 wt%) from n-nonane at a temperature interval of 260-300°C and normal pressure. The yield of $C_4$+ hydrocarbons of products produced achieved 94-95 wt% containing about 70 wt% of branched isomers of paraffins, 3.3-6.5 wt% of naphtha fraction and very low concentrations of olefins and aromatics. Only traces of methane and ethane, and 2.5-4.9 wt% of propane was observed among produced products. Calculated octane numbers of $C_4$+ products by PIONA method achieved 95-100. From Tables 6-8, it can be taken that the main products of n-decane hydroconversion over catalysts used in the process of the present invention were isomers of $C_4$-$C_6$-hydrocarbons (77.7-80.3 wt%). The yield of $C_4$+ hydrocarbons of produced products achieved 96-98 wt% containing about 75 wt% of branched isomers of paraffins, 2-3 wt% of naphtha fraction and very low concentrations of olefins and aromatics. Only traces of methane and ethane, and 3.3-3.5 wt% of propane was observed among the products. The calculated octane numbers of produced $C_4$+ products by PIONA method achieved 90.1-90.3.

As can be taken from Table 9, by increasing the molecular weight of the feedstock resulted in a complete conversion of n-paraffins to increase of $C_4$+ fraction of more than 99%. The amount of gasoline range isoparaffins $C_5$-$C_{10}$ also increases significantly. The yield of $C_5$+ hydrocarbons increases from 79.4 to 91.1 wt%, when n-paraffin chain increases from $C_{11}$ to $C_{16}$. The isomer/normal paraffin ratio of the process products also increases considerably. It is remarkable that the yield of propane decreases from 2.5 for n-$C_{11}$ to 0.8-0.9 for $C_{14}$-$C_{16}$ normal paraffins, and no methane and ethane products are formed.

From Tables 10-12 it can be seen that the catalysts used in the process of the present invention convert a mid-cut naphtha fraction to gasoline components with octane number 90.1-91.9. The reaction products contain more than 92-98 wt% of $C_4$+ hydrocarbons depending on the catalyst composition used, consisting mostly of isoparaffins (up to 64.2 wt%) and naphthenic hydrocarbons (up to 28.4 wt%). No methane and ethane are formed.

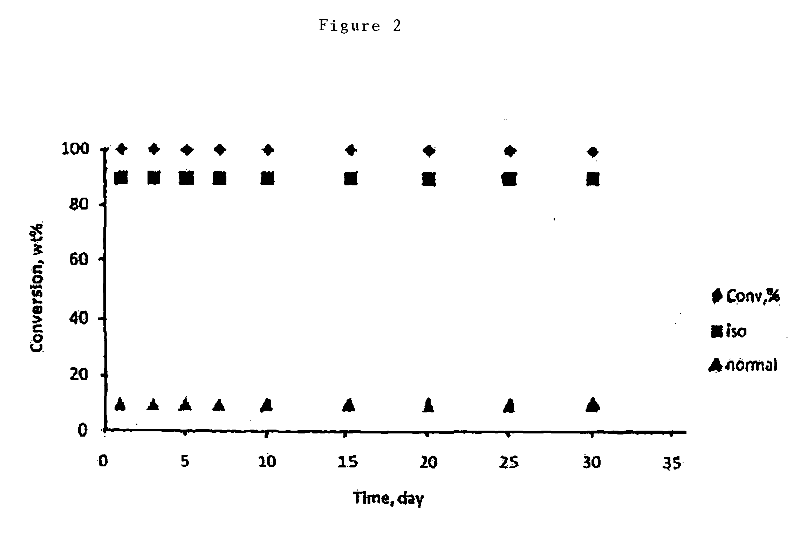

Finally, the stability of the inventive catalyst composition was tested, normal hexadecane in the presence of hydrogen was fed to a tubular reactor containing a catalyst bed of Ni-Pt/USY/ZSM-5/(Al$_2$O$_3$+ZrO$_2$+TiO$_2$) at 220°C and at normal pressure during one month of continuous operation. During this period the catalyst had very high stability with a very low deactivation rate, see Figure 2.

The features disclosed in the foregoing description, the claims and the drawings may, both separately and in any combination thereof, be material for realizing the invention in divers forms thereof.

## Claims

1. Hydroconversion process which comprises reacting a hydrocarbon feed rich in normal and/or slightly branched paraffins with a source of hydrogen in the presence of a catalyst composition which comprises two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being preferably ultrastable Y zeolite (USY), and a binder of up to 25 weight percent, based on the total weight of the support, at a pressure of about 1-5 bar and at a temperature in the range of 200-300°C, with a hydrogen/feed molar ratio in the range of from 5 to 15 mol/mol.

2. Hydrocracking and isomerization process according to claim 1, wherein the hydrocarbon feed comprises C$_9$+ normal paraffins and/or mid-cut naphtha petroleum fraction, preferably hydrotreated naphtha.

3. Process according to claim 1 or 2, wherein the two different metals of the catalyst composition are Pt-Ni, Pd-Ni, Pt-Fe, Pt-Ir or Pt-Co, preferably Pt-Ni.

4. Process according to any of the preceding claims, wherein the at least two different crystalline molecular sieves are selected from USY, ZSM-5 and zeolite beta.

5. Process according to any of the preceding claims, wherein the process is carried out in a tubular bed type reactor having a space velocity in the range of 0.5 to 4.0 h$^{-1}$.

6. Process according to any of the preceding claims, wherein the binder comprises gamma-Al$_2$O$_3$, SiO$_2$, ZrO$_2$, TiO$_2$ or any mixtures thereof.

7. Process according to any of the preceding claims, wherein the crystalline molecular sieves are in acid form.

8. Catalyst composition for hydrocracking and isomerization of a hydrocarbon feed rich in normal and/or slightly branched paraffins, comprising two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being preferably ultrastable Y zeolithe (USY), and a binder of up to 25 weight percent, based on the total weight of the support.

**Amended claims in accordance with Rule 137(2) EPC.**

1. Hydroconversion process which comprises reacting a hydrocarbon feed comprising C$_9$$^+$ normal paraffins and/or mid cut naphtha petroleum fraction with a source of hydrogen in the presence of a catalyst composition which comprises two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being ultrastable Y zeolite (USY), and a binder of up to 25 weight percent, based on the total weight of the support, at a pressure of about 1-5 bar and at a temperature in the range of 200-300°C, with a hydrogen/feed molar ratio in the range of from 5 to 15 mol/mol.

2. Hydroconversion process according to claim 1, wherein the hydrocarbon feed comprises hydrotreated naphtha.

**3.** Process according to claim 1 or 2, wherein the two different metals of the catalyst composition are Pt-Ni, Pd-Ni, Pt-Fe, Pt-Ir or Pt-Co, preferably Pt-Ni.

**4.** Process according to any of the preceding claims, wherein additional crystalline molecular sieves are selected from ZSM-5 and zeolite beta.

**5.** Process according to any of the preceding claims, wherein the process is carried out in a tubular bed type reactor having a space velocity in the range of 0.5 to 4.0 h$^{-1}$.

**6.** Process according to any of the preceding claims, wherein the binder comprises gamma-$Al_2O_3$, $SiO_2$, $ZrO_2$, $TiO_2$ or any mixtures thereof.

**7.** Process according to any of the preceding claims, wherein the crystalline molecular sieves are in acid form.

**8.** Catalyst composition for hydrocracking and isomerization of a hydrocarbon feed comprising $C_9^+$ normal paraffins and/or mid cut naphtha petroleum comprising two different metals from group VIII of the periodic table of elements, the first metal being preferably selected from platinum, palladium or iridium, and the second metal being preferably selected from nickel, cobalt or iron, on a support which comprises at least two different crystalline molecular sieves having each pores with a largest diameter in a range of 0.56-0.74 nm, one of the molecular sieves being ultrastable Y zeolithe (USY), and a binder of up to 25 weight percent, based on the total weight of the support.

Figure 1

Needle Valve
Check Valve
Three way Valve
Feed Pump
Condenser
Flow Controller

Heat

N2

H2

GC

P-21

EP 2 298 445 A1

13

Figure 2

EP 2 298 445 A1

Europäisches
Patentamt

European
Patent Office

Office européen
des brevets

# EUROPEAN SEARCH REPORT

Application Number

EP 09 01 0655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 183 419 A2 (MOBIL OIL CORP [US]) 4 June 1986 (1986-06-04) * abstract * * column 2, line 7 - line 56 * * column 2, line 62 - column 5, line 3 * * column 5, line 52 - column 6, line 2 * * column 8, line 16 - line 23 * * column 16, line 15 - line 41 * * examples * * claims 1-3,6 * ----- | 1-8 | INV. B01J29/068 B01J29/072 B01J29/10 B01J29/42 B01J29/72 B01J37/00 C10G45/64 B01J29/80 |
| X | US 2009/023968 A1 (WANG DEJU [CN] ET AL) 22 January 2009 (2009-01-22) * abstract * * paragraphs [0010], [0011], [1518], [0023], [0026], [0027], [0040] * * examples 2,3 * ----- | 1-2,4-5, 7-8 | |
| | | | TECHNICAL FIELDS SEARCHED (IPC) B01J C10G |

The present search report has been drawn up for all claims

| Place of search | Date of completion of the search | Examiner |
|---|---|---|
| Munich | 25 January 2010 | Omegna, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 01 0655

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2010

| Patent document cited in search report | | Publication date | Patent family member(s) | | Publication date |
|---|---|---|---|---|---|
| EP 0183419 | A2 | 04-06-1986 | JP | 61130393 A | 18-06-1986 |
| US 2009023968 | A1 | 22-01-2009 | KR | 20090009165 A | 22-01-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3969277 A

- EP 1640434 A1

**Non-patent literature cited in the description**

- **Ch. Baerlocher ; W.M. Meier ; D.H. Olson.** Atlas of Zeolite Framework Types. Elsevier, 2001